# EUROPÄISCHE PATENTSCHRIFT

(11) **EP 3 513 128 B1**
(45) Veröffentlichungstag und Bekanntmachung des Hinweises auf die Patenterteilung: **13.05.2020**
(21) Anmeldenummer: 16809813.5
(22) Anmeldetag: 13.12.2016
(51) Int. Cl.: F24D 19/10, F24F 3/06, F24F 11/00, G05D 23/19

(54) **VERFAHREN ZUM AUFHEIZEN ODER ABKÜHLEN VON RÄUMEN EINES GEBÄUDES**
METHOD FOR HEATING OR COOLING ROOMS IN A BUILDING
PROCÉDÉ DE CHAUFFAGE OU DE REFROIDISSEMENT DE PIÈCES D'UN BÂTIMENT

(43) Veröffentlichungstag der Anmeldung: 24.07.2019
(73) Patentinhaber: Oblamatik AG, 7000 Chur (CH)
(72) Erfinder: OBRIST, Roland, 7412 Scharans (CH)
(74) Vertreter: OK pat AG
(86) Internationale Anmeldenummer: PCT/EP2016/080777
(87) Internationale Veröffentlichungsnummer: WO 2018/108245

(56) Entgegenhaltungen:
- DE-A1-102014 102 275
- DE-A1-102014 103 668

## Beschreibung

Die Erfindung betrifft ein Verfahren zum Aufheizen oder Abkühlen von Räumen eines Gebäudes mit einem Temperiersystem, d.h. einer Heizungsanlage oder Kühlanlage, die über ein mit einer zentralen Umwälzpumpe betriebenes Kreislaufverbundsystem mehrere Räume parallel mit jeweils an die Vor- und Rücklaufleitung angeschlossenen Wärmetauscher-Einrichtungen mit einem Temperierfluid versorgt. Dabei soll sichergestellt werden, dass alle Wärmetauscher-Einrichtungen in Räumen eines Gebäudes ausreichend thermisch versorgt werden, so dass insbesondere bei der Durchführung eines Temperaturübergangs, d.h. beim Aufheizen oder Abkühlen, die Temperaturdifferenz zwischen dem am schnellsten reagierenden Raum und dem am langsamsten reagierenden Raum möglichst klein gehalten wird.

Theoretisch sollte ein solcher Temperaturübergang kein Problem darstellen, falls das Gesamtsystem mit allen Wärmetauschern und Verbindungsleitungen hydraulisch abgeglichen ist. Ein hydraulischer Abgleich bedeutet, dass durch begrenzbare Rücklaufverschraubungen oder begrenzbare Thermostatventile der Durchfluss durch jeden einzelnen Wärmetauscher auf die vorgesehene richtige Menge begrenzt wird, d.h. durch aufeinander abgestimmte Voreinstellungen eine gleichmässige Verteilung des Temperierfluids in alle Temperierkreise bewerkstelligt wird. Ohne hydraulischen Abgleich kommt es wegen des unterschiedlichen Fliesswiderstandes in den Leitungssträngen in Räumen nahe der Umwälzpumpe bzw. des Wärme-Erzeugers oder Kälte-Erzeugers zu einer thermischen Überversorgung und bei entfernt liegenden Räumen zu einer thermischen Unterversorgung. Die Temperierkreise nahe gelegener Räume müssen wegen des geringeren Fliesswiderstandes für den hydraulischen Abgleich in ihrem Durchfluss begrenzt werden. Eine optimale Feinabstimmung eines Gesamtsystems erfordert viele Detailkenntnisse und Berechnungen mit einem Rechenmodell, was in der Praxis auch wegen fehlender Daten oft schwierig durchzuführen ist.

Das Problem mit thermisch schlecht versorgten, weit entfernten Räumen und ungenügendem hydraulischem Abgleich zeigt sich oft bei grossen Gebäuden mit vielen Räumen oder Wohnungen. Besonders offensichtlich wird der nachteilige Effekt beispielsweise bei Gebäuden wie Schulhäusern oder Büro- und Verwaltungsgebäuden, bei denen am Abend die Temperatur zur Energieeinsparung jeweils abgesenkt wird. Nach der Nachtabsenkung sollen aber am anderen Morgen durch Umschaltung auf die Komfort-Betriebsart alle Räume möglichst schnell wieder auf ihre höhere Solltemperatur aufgeheizt werden (z.B. innerhalb von 1-2 Stunden). Dabei kommt es häufig vor, dass weit entfernte Räume wegen zu kleiner Durchflussmenge in den Heizkörpern länger kalt bleiben und nur langsam in der Temperatur hochkommen, während Zimmer in der Nähe des Heizkessels sehr schnell warm werden. Das Problem und Möglichkeiten zur Korrektur eines mangelhaften hydraulischen Abgleichs sind im Stand der Technik schon verschiedentlich behandelt worden.

Das Dokument DE 10 2004 017 593 B3 betrifft eine Kühl- und/oder Heizvorrichtung und zeigt ein schematisches Schaltbild einer Heizvorrichtung in einem Gebäude bestehend aus mehreren Etagen mit jeweils mehreren Heizkörpern. In der Zulaufleitung jedes Heizkörpers ist ein von einer Steuereinheit über einen Stellmotor betätigbares Ventil zur Einstellung bzw. Regelung des Fluid-Volumenstroms eingebracht. Die Steuereinheit weist einen Regelkreis für die Regelung des hydraulischen Abgleichs der Kreisläufe auf, wobei der Regelkreis für den hydraulischen Abgleich mit Temperatursensoren auf der Vor- und Rücklaufseite jedes Heizkörpers gebildet wird, und wobei jeder Heizkörper mittels der Ventile auf eine Soll-Temperaturdifferenz geregelt wird, die im Sinne des hydraulischen Abgleichs einem bestimmten Volumenstrom entsprechen soll. Der Einstellvorgang des hydraulischen Abgleichs erfolgt in zeitlichen Schritten, d.h. in einer allmählichen System-Angleichung, um ein Überschwingen des Systems zu vermeiden. Diesem Regelkreis ist in der Steuereinheit ein weiterer Regelkreis überlagert, für die Regelung der einzelnen Raumtemperaturen auf den gewünschten Sollwert.

Das Dokument DE 10 2009 004 319 A1 schlägt, ausgehend vom Problem der nicht immer befriedigenden Thermostatventile und einer statischen Voreinstellung, eine zum Dokument DE 10 2004 017 593 B3 regeltechnisch ähnliche temperaturbasierte Lösung zum Betreiben einer Heizungs- oder Kühlanlage vor, um einen zusätzlichen dynamischen hydraulischen Abgleich zu bewirken. Dieses Verfahren verwendet entweder nur die Rücklauftemperatur (die einen maximalen Wert nicht überschreiten soll) oder die Differenz zwischen Vor- und Rücklauftemperatur zur Durchführung des hydraulischen Abgleichs bzw. zur Regelung des Volumenstroms durch die einzelnen Wärmetauscher bzw. Heizkörper (mittels Stromventil und Dehnstoffelement und zusätzlichem Stellglied, das von einer zugehörigen Steuerung angesteuert wird). Zudem wird auch das Signal eines Raumtemperaturfühlers erfasst, welches verglichen mit dem Raumtemperatur-Sollwert ebenfalls eine Regeldifferenz ergibt, die im Regel- und Steuergerät mit dem anderen Signal überlagert wird, und das Stellglied mit der zusammengefassten Regler-Ausgangsgrösse angesteuert wird.

In der EP 3 034 955 A1 wird ein Verfahren zum automatisierten hydraulischen Abgleich einer Heizungsanlage vorgeschlagen, bei welchem der Wärmeverbraucher mit der niedrigsten Rücklauftemperatur ermittelt wird. Temperatursensoren im Rücklauf werden somit vorausgesetzt. Der Volumenstrom des am schlechtesten versorgten Wärmeverbrauchers (mit dem geringsten Volumenstrom) wird gar nicht oder nur wenig begrenzt. Der Volumenstrom für die anderen Wärmeverbraucher wird anhand von deren Rücklauftemperaturen durch eine Regel- und/oder Steuereinheit über Regelventile angepasst (d.h. reduziert), so dass in der Folge alle Rücklauftemperaturen einander angeglichen werden und in einem vorgebbaren Bereich liegen (und das Gesamtsystem zusammen mit den entsprechenden Regelventilstellungen hydraulisch abgeglichen ist).

Das in der WO 2009/072759 A2 beschriebene Verfahren zur Regelung eines Heizsystems ist ähnlich zum vorherigen und funktioniert bevorzugt so, dass das Verhältnis der Öffnungsgrade der jeweiligen Raumventile durch den Systemregler so berechnet und eingestellt wird, dass der Öffnungsgrad desjenigen Raumventils, dessen Rücklauf nach dem Start des Systems am längsten braucht um auf eine bestimmte Temperatur zu kommen (als "arrival time" bezeichnet), ganz geöffnet wird, während die Öffnungsgrade der anderen Raumventile in Bezug auf den maximalen Öffnungsgrad in dem Masse proportional reduziert werden, wie deren "arrival times" im Verhältnis zur längsten "arrival time" kürzer waren. Auch hier werden die Rücklauftemperaturen sowie deren zeitlicher Verlauf als Kriterium für die Einstellung der Regelventile herangezogen.

Bei der in der WO 2012/146323 A2 beschriebenen Vorgehensweise zum automatischen hydraulischen Abgleichen von Heizkörpern lässt man zur Ermittlung von hydraulisch unterversorgten Heizkörpern zunächst ein Haus abkühlen. Nachdem die Heizkörper-Stellventile mehrere Stunden geschlossen waren, wird durch geringes teilweises Öffnen in Bruchteilen des maximalen Hubs der von Stellmotoren gesteuerten Stellventile in kleinen Ventilhub-Schritten im Gleichtakt langsam hochgefahren. Dies wird in zeitlichen Intervallen gemacht, und dabei jeweils die Veränderung in den Raumtemperaturen in einer zentralen Steuereinrichtung verfolgt. Mit Hilfe dieses Verfahrens wird nach und nach die Temperatur in den Räumen eines Hauses erhöht und festgestellt, in welchem Raum eines Hauses eine weitere Erhöhung der Temperatur durch weitere Öffnung der Stellventile ab einem gewissen Zeitintervall nicht mehr oder nur unzureichend erreichbar ist. Das entsprechende Stellventil wird dann vollständig geöffnet. Die anderen Stellventile werden ab dem betreffenden Zeitintervall individuell nur soweit in Ventilhub-Schritten weiter geöffnet oder gegebenenfalls wieder teilweise geschlossen, bis an den jeweiligen Raum-Thermostaten die Solltemperatur erreicht und gemessen wird. Die Stellung jedes Stellmotors bei der Solltemperatur wird als maximale Offenstellung für das jeweilige Stellventil bestimmt, und entspricht einer hydraulisch abgeglichenen Einstellung. Im normalen, durch die Raum-Thermostaten geregelten Heizbetrieb werden dann die Stellmotoren bzw. Stellantriebe nur noch zwischen der geschlossenen Stellung und der jeweiligen maximalen Offenstellung bewegt. Somit wird schliesslich mit einer Verhältniseinstellung der maximalen Ventilhübe ähnlich wie im vorangehend zitierten Dokument gearbeitet.

Das Dokument DE 10 2014 103 668 A1 befasst sich speziell mit der Aufheizphase vor dem stationären Betrieb, also der Durchführung eines Temperaturübergangs mit einem Temperiersystem, z.B. nach dem Einschalten oder nach dem Umschalten auf eine andere Betriebsart, bei dem Unterschiede aufgrund eines schlechten hydraulischen Abgleichs besonders stark zum Vorschein treten. Da sich die vorliegende Erfindung ebenfalls auf solche Übergangsphasen bezieht, kann DE 10 2014 103 668 A1 als der nächstkommende Stand der Technik betrachtet werden.

Gemäss dem in der DE 10 2014 103 668 A1 beschriebenen Verfahren wird in einer Heiz- und/oder Kühlanlage mit über Stellmotoren einstellbaren Ventilen der hydraulische Abgleich beim Anfahren (Aufheiz- oder Abkühlphase) von der zentralen Regeleinheit fortlaufend (dynamisch) in Abhängigkeit von dem hydraulisch ungünstigsten Ventil vorgenommen, und zwar so, dass der Temperaturübergang auch mit einer unbekannten und unabgeglichenen Rohrnetzstruktur einer Heizungsanlage relativ schnell und praktisch gleichzeitig für alle Räume durchgeführt werden kann. Das hydraulisch ungünstigste Ventil (mit dem zugehörigen Heizkörper) ist dabei als dasjenige definiert, das am weitesten geöffnet sein muss, um die Soll-Temperatur des entsprechenden Raumes zu halten oder eine gewünschte Temperatur zu erreichen, bzw. dasjenige des hydraulisch ungünstigsten Raumes, der sich bei gleichem Ventilhub am langsamsten erwärmt. Das Verfahren von DE 10 2014 103 668 A1 ist in Zeitintervalle einer Länge von z.B. je 10-20 Minuten unterteilt. Zu Beginn der Aufheizphase werden für das erste Zeitintervall alle Ventile gleich weit geöffnet, z.B. 100 % (bei einer Inbetriebnahme) oder weniger (z.B. 15 % bei einer Umstellung). Ganz zu Beginn ist also die Anlagenhydraulik nicht abgeglichen, womit am Ende des ersten Zeitintervalls das hydraulisch ungünstigste Ventil feststeht, dessen Ventilhub bei 100 % belassen bzw. auf 100 % eingestellt wird. Alle anderen Ventile werden für das nächste und die folgenden Zeitintervalle in ihrem Hub begrenzt und jeweils auf neue Werte eingestellt, und zwar individuell nach einem Algorithmus, der nach jedem Zeitintervall die einzelnen in jedem Raum bis dahin erreichten Aufheizanteile bestimmt und daraus neue prozentuale Hubgrenzwerte für das nächste Zeitintervall berechnet. Unter dem Aufheizanteil eines Raumes wird dabei der erreichte Anteil der Temperaturerhöhung (Temperatur-Istwert minus Anfangs-Raumtemperatur) im Verhältnis zur Differenz zwischen dem angestrebten Temperatur-Sollwert und der Anfangs-Raumtemperatur verstanden. Auch der in einem einzelnen Zeitintervall erzielte Aufheizanteil geht in die Berechnung ein, und die Hubbegrenzungen werden im Verhältnis zum ganz offenen hydraulisch ungünstigsten Ventil und dem aktuellen Aufheizanteil jenes ungünstigsten Raumes so berechnet, dass die Temperatur-Sollwerte in allen Räumen möglichst gleichzeitig erreicht werden. Diese Prozedur wiederholt sich, bis die Aufheizphase endet bzw. die Temperatur-Istwerte die dazugehörigen Sollwerte erreicht haben, wobei zwischenzeitlich in einzelnen Zeitintervallen betrachtet die Räume unterschiedlich stark erwärmt wurden. Nach dem Erreichen der Temperatur-Sollwerte schliesst sich die stationäre Regelungsphase an.

Aufgabe der vorliegenden Erfindung ist es, ein gegenüber dem Stand der Technik alternatives Verfahren zum Aufheizen oder Abkühlen von Räumen eines Gebäudes zur Verfügung zu stellen.

Diese Aufgabe wird durch ein Verfahren mit den Merkmalen des Anspruchs 1 gelöst.

Beim Verfahren gemäss Anspruch 1 zum Aufheizen oder Abkühlen von Räumen eines Gebäudes mit einem Temperiersystem umfasst das Temperiersystem:
a) einen zentralen Wärme-Erzeuger oder Kälte-Erzeuger mit einem Kreislaufverbundsystem mit Vor- und Rücklaufleitung;
b) eine zentrale Umwälzpumpe für die Zirkulation eines Temperierfluids im Kreislaufverbundsystem;
c) mindestens zwei Wärmetauscher-Einrichtungen, die jeweils einen Raum des Gebäudes thermisch versorgen, und die jeweils an die Vor- und Rücklaufleitung des Kreislaufverbundsystems angeschlossen sind;
d) je ein Ventil mit Stellantrieb pro Wärmetauscher-Einrichtung;
e) je einen Raumtemperaturfühler pro thermisch versorgtem Raum; und
f) eine zentrale Steuer- und Regeleinheit, welche mit den Stellantrieben der Ventile sowie mit den Raumtemperaturfühlern verbunden ist.

Mit den so angeschlossenen Wärmetauscher-Einrichtungen (die weiter hinten noch erläutert werden) ergibt sich ein Kreislaufverbundsystem mit entsprechenden parallelen Temperierkreisen. Die Ventile können entweder direkt bei der jeweiligen Wärmetauscher-Einrichtung oder im zugehörigen Temperierkreis angeordnet sein. Beim Stellantrieb handelt es sich zum Beispiel um einen Stellmotor oder um ein Stellglied mit Dehnstoffelement. Das Dehnstoffelement ist beispielsweise ein Wachsdehnelement. Die Raumtemperaturfühler messen die Temperatur des im jeweiligen Raum befindlichen Fluids (z.B. Luft). Das erfindungsgemässe Verfahren bezieht sich nur auf vom Temperiersystem versorgte Räume eines Gebäudes.

Mit dem Aufheizen oder Abkühlen wird in den thermisch versorgten Räumen des Gebäudes ein Temperaturübergang vollzogen von einem Ausgangszustand auf einen vom Ausgangszustand unterschiedlichen Endzustand mit entsprechenden Raumtemperatur-Sollwerten. Beim Temperaturübergang wird erfindungsgemäss nach folgendem Algorithmus mit mindestens zwei zwischen dem Ausgangszustand und dem Endzustand liegenden, vorgewählten Temperaturstufen vorgegangen:
i) zunächst werden von der zentralen Steuer- und Regeleinheit alle Ventile ganz geöffnet;
ii) sobald in einem Raum die vom entsprechenden Raumtemperaturfühler gemeldete Temperatur eine erste Temperaturstufe erreicht hat, wird das betreffende Ventil ganz geschlossen;
iii) sobald in einem nächsten Raum diese erste Temperaturstufe ebenfalls erreicht wird, wird auch jenes Ventil ganz geschlossen;
iv) mit jedem weiteren Raum wird so verfahren, bis auch in einem letzten Raum diese erste Temperaturstufe erreicht wird;
v) sodann werden alle Ventile wieder ganz geöffnet, bis in einem Raum eine zweite Temperaturstufe erreicht wird, worauf das betreffende Ventil ganz geschlossen wird, und es wird weiter so verfahren, bis auch in einem letzten Raum diese zweite Temperaturstufe erreicht wird;
vi) alle Ventile werden wieder ganz geöffnet, und der Algorithmus wird so lange fortgesetzt, bis alle thermisch versorgten Räume ihren Raumtemperatur-Sollwert erreicht haben;
vii) nach Erreichen eines Raumtemperatur-Sollwertes folgt eine Regelungsphase, in welcher die Temperatur im betreffenden Raum durch die zentrale Steuer- und Regeleinheit auf einem dem Raumtemperatur-Sollwert entsprechenden End-Temperaturniveau gehalten wird.

Der Algorithmus umfasst unter vi) mindestens eine weitere Temperaturstufe, falls mehr als zwei Temperaturstufen vorgewählt wurden.

Bevorzugte Ausführungsformen des erfindungsgemässen Verfahrens ergeben sich aus den abhängigen Ansprüchen.

Vorteile des erfindungsgemässen Verfahrens umfassen:
- Einfacherer Algorithmus im Vergleich zu DE 10 2014 103 668 A1
- Funktioniert auch bei unbekannten und unabgeglichenen Rohrnetzstrukturen
- Keine Rücklauftemperatur- und Volumenstrom-Messungen erforderlich
- Keine Berechnungen zur Hydraulik nötig
- Keine Berechnung und Einstellung von partiellen Ventilhüben
- Unabhängig von Zeitmessungen oder von Zeitintervallen

Das Temperiersystem des vorliegenden Verfahrens ist bevorzugt eine Heizungsanlage und/oder eine Kühlanlage. Damit ist gemeint: entweder eine Heizungsanlage, oder eine Kühlanlage, oder (mit dem "und" von "und/oder") eine Heiz-/Kühl-Anlage die als Kombianlage für beides einsetzbar ist. Ob mit dem Temperiersystem geheizt oder gekühlt wird, hängt davon ab, ob das Temperierfluid im Kreislaufverbundsystem in seiner Vorlauftemperatur oberhalb oder unterhalb der Raumtemperatur liegt. Aufgrund des physikalischen Prinzips des Wärmeflusses von warm zu kalt muss zum Aufheizen von Räumen die inhärente Voraussetzung erfüllt sein, dass die Vorlauftemperatur des Temperierfluids höher ist als der zu erreichende Raumtemperatur-Sollwert. Zum Abkühlen braucht es eine Vorlauftemperatur, die tiefer ist als der angestrebte Raumtemperatur-Sollwert. Die Verfahren zum Aufheizen und Abkühlen funktionieren grundsätzlich analog, einfach mit umgekehrten Vorzeichen. Das hier vorgestellte erfindungsgemässe Verfahren ist für beides anwendbar.

Die Wärme wird mit den Räumen, d.h. mit dem in den Räumen befindlichen Fluid, über je eine Wärmetauscher-Einrichtung pro thermisch versorgtem Raum ausgetauscht. Eine Wärmetauscher-Einrichtung umfasst mindestens einen Wärmetauscher. In der Wärmetauscher-Einrichtung eines thermisch versorgten Raumes können im Rahmen der vorliegenden Erfindung auch zwei oder mehr Wärmetauscher verwendet und in Serie oder parallel geschaltet sein; in jedem Fall werden die Wärmetauscher eines Raumes gemeinsam versorgt über jeweils genau einen Vorlauf-Anschluss und ein Ventil mit Stellantrieb. Unter einem Wärmetauscher wird im Zusammenhang mit der vorliegenden Erfindung ein Temperierelement verstanden, welches von einem Temperierfluid durchströmbar ist und zum Aufheizen und/oder Abkühlen des im Raum befindlichen Fluids (z.B. Luft) dient.

Die Wärmetauscher sind vorzugsweise ausgewählt aus Heizkörpern und/oder Kühlkörpern, die bevorzugt an der Wand, im Boden oder an der Decke eines Raums angebracht sind, aber auch freistehend sein könnten. Für einen Wärmetauscher sind verschiedene Geometrien möglich. Ein Wärmetauscher kann auch unterteilt sein. Besonders bevorzugte Wärmetauscher sind Radiatoren und Fussbodenheizungen.

Unabhängig von der genauen Bezeichnung kann jeder Wärmetauscher im Prinzip zum Aufheizen oder zum Abkühlen verwendet werden, je nach Verhältnis von Vorlauftemperatur zu Raumtemperatur, wie oben erläutert.

Beim Temperierfluid handelt es sich um ein geeignetes Wärmeträgermedium. Bevorzugtes Wärmeträgermedium ist Wasser, als Heizwasser oder Kühlwasser. Auf eine zum Aufheizen oder zum Abkühlen passende Vorlauftemperatur wird das Temperierfluid vom zentralen Wärme-Erzeuger oder Kälte-Erzeuger gebracht. In einer Heiz-/Kühl-Kombi-Anlage wird bevorzugt ohne Auswechslung des Temperierfluids gearbeitet, d.h. mit demselben Temperierfluid wird bevorzugt lediglich die Vorlauftemperatur dem Zweck entsprechend angepasst. Für tiefere Temperaturen ist ein Kühlmittel bzw. eine Kühlflüssigkeit mit niedrigerem Gefrierpunkt bevorzugt, z.B. ein Wasser-Glykol-Gemisch. Das Temperierfluid kann im Übrigen Zusätze enthalten, z.B. Inhibitoren gegen Korrosion.

Vorzugsweise werden mindestens drei Räume des Gebäudes von Wärmetauscher-Einrichtungen thermisch versorgt.

Das Gebäude, welches die Räume mit den Wärmetauscher-Einrichtungen umfasst, kann stationär oder mobil sein. Bevorzugte stationäre Gebäude weisen viele thermisch zu versorgende Räume bzw. Zimmer oder Wohnungen auf. Gegebenenfalls sind es Gebäude mit einer Nachtabsenkung der Temperatur, wo das erfindungsgemässe Verfahren beim morgendlichen Aufheizen in vorteilhafter Weise angewandt werden kann. Umgekehrt kann es sich im Falle einer Kühlanlage beim Gebäude auch um ein Lagerhaus oder Kühlhaus für Lebensmittel oder andere verderbliche Güter handeln. Hier könnten als in den Räumen befindliche Fluide statt Luft auch Inertgase wie Stickstoff oder Kohlendioxid in Frage kommen. Als Raumfluid wäre im weitesten Sinne in besonderen Fällen auch eine Flüssigkeit denkbar, und als dazu passendes Wärmetauscher-Design z.B. eine Rohrschlange.

Unter mobilen Gebäuden sollen im Rahmen dieser Erfindung auch Fahrzeuge zu Land, zu Wasser und in der Luft verstanden werden, die in mehrere Räume oder Kabinen unterteilt sein können.

Vorzugsweise umfasst der Algorithmus des erfindungsgemässen Verfahrens mindestens drei vorgewählte Temperaturstufen zwischen dem Ausgangszustand und dem dazu unterschiedlichen Endzustand. Dabei wird zwischen den Temperaturstufen bevorzugt eine konstante Schrittgrösse gewählt. Die Schrittgrösse liegt besonders bevorzugt im Bereich von 0.1 bis 1.0 °C, ganz besonders bevorzugt bei 0.5 °C.

Ein besonderes Kennzeichen des erfindungsgemässen Verfahrens ist es, dass eine nächste Temperaturstufe im Algorithmus jeweils erst dann in Angriff genommen wird, wenn in allen thermisch versorgten Räumen eine bestimmte Temperaturstufe erreicht worden ist. Die einzelnen Raumtemperaturen im Ausgangszustand und/oder im dazu unterschiedlichen Endzustand können hingegen individuell verschieden sein.

An dieser Stelle soll noch angemerkt werden, dass es in einem Gebäude auch Räume geben kann, die nicht zum Temperieren vorgesehen sind, und nicht vom Temperiersystem versorgt werden. Das erfindungsgemässe Verfahren bezieht sich wie gesagt nur auf die vom Temperiersystem versorgten Räume eines Gebäudes.

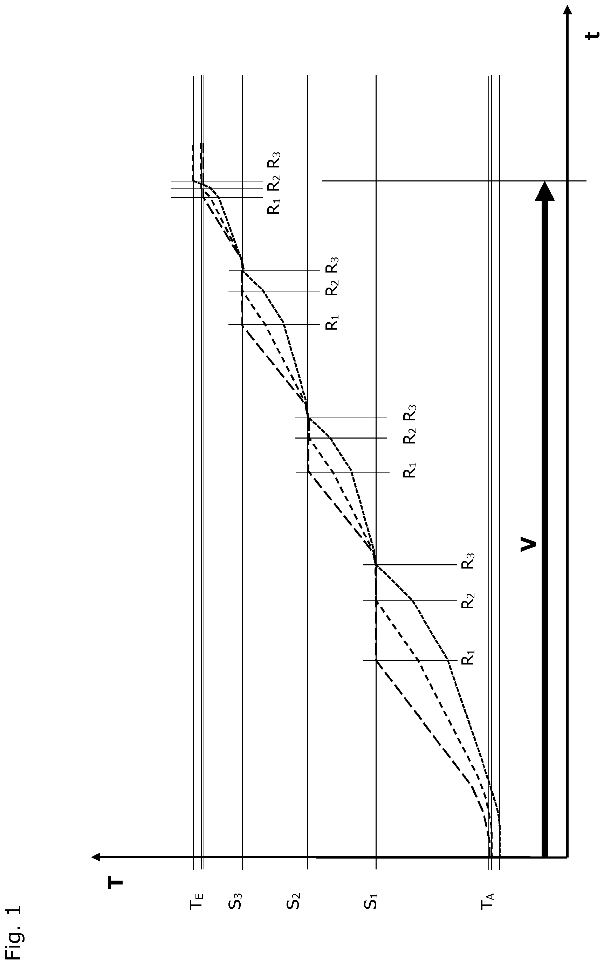

Das Verfahren wird nun anhand eines in Figur 1 schematisch dargestellten Verlaufs beispielhaft und in nicht einschränkender Weise erläutert.

Figur 1 zeigt den Temperaturverlauf in drei Räumen bei einem Temperaturübergang gemäss dem erfindungsgemässen Verfahren. In diesem Beispiel ist ein Aufheiz-Vorgang in einem Temperatur (T) / Zeit (t) - Diagramm dargestellt. Das erfindungsgemässe Verfahren V beginnt in einem Ausgangszustand TA, in welchem die Temperatur in den drei Räumen wie dargestellt verschieden oder gleich sein kann. Mit dem Öffnen der drei Ventile beginnt das Temperierfluid, dessen kontrollierte Vorlauftemperatur höher ist als die im Endzustand TE zu erreichenden Raumtemperaturen, zu den drei Wärmetauscher-Einrichtungen zu fliessen, und die Wärmetauscher werden durchströmt. Nach einer Anlaufzeit beginnen die Raumtemperaturen unterschiedlich schnell zu steigen. Am langsamsten erwärmt wird der am weitesten vom Wärme-Erzeuger entfernte Raum mit der längsten Leitung und dem grössten Fliesswiderstand. Zwischen dem Ausgangszustand TA und dem Endzustand TE sind im dargestellten Beispiel drei vorgewählte Temperaturstufen S₁, S₂ und S₃ definiert. Sobald der sich am schnellsten erwärmende Raum an der Stelle R₁ die Stufe S₁ erreicht, wird das zugehörige Ventil ganz geschlossen. Ein mögliches leichtes Überschwingen der Raumtemperatur wurde bei der grafischen Darstellung vernachlässigt. In den zwei anderen Temperierkreisen strömt das Temperierfluid ab R₁ etwas schneller (und jene Raumtemperaturen steigen etwas schneller an), weil ihnen jetzt der Druck der zentralen Umwälzpumpe zur Verfügung steht, der sich vorher auf alle drei Temperierkreise verteilt hatte. Sobald die Temperatur des zweiten Raums an der Stelle R₂ die Temperaturstufe S₁ auch erreicht, wird auch dieses zugehörige Ventil ganz geschlossen. Ab dann wirkt der Förderdruck der Umwälzpumpe ausschliesslich auf den Temperierkreis des letzten Raumes, dessen Temperatur in einem noch etwas steileren Anstieg an der Stelle R₃ die Stufe S₁ ebenfalls erreicht. Anschliessend werden alle Ventile wieder ganz geöffnet (d.h. das letzte Ventil bleibt offen und die anderen Ventile werden wieder geöffnet), und der Algorithmus wird auf gleiche Weise fortgesetzt, bis eine Raumtemperatur nach der anderen die zweite Temperaturstufe S₂ erreicht. R₁, R₂ und R₃ zeigen wieder die Stellen an, an denen die Temperatur des schnellsten, des zweitschnellsten und des langsamsten Raums diese Temperaturstufe erreicht. Dazu soll noch angemerkt werden, dass R₁, R₂ und R₃ nicht festen Räumen, sondern der Reihenfolge im Erreichen der jeweiligen Temperaturstufe zugeordnet sind. Es ist möglich, dass sich in Bezug auf einzelne Räume die Reihenfolge in einem folgenden Algorithmusschritt ändern kann; in der Regel bleibt sie jedoch gleich, so wie in Figur 1 mit den gestrichelten Linien dargestellt. Auch das Erreichen der dritten Temperaturstufe S₃ spielt sich im Algorithmus wieder nach demselben Muster ab. Immer wird auch der sich am langsamsten erwärmende Raum auf diese Weise von Temperaturstufe zu Temperaturstufe mitgezogen, so dass die Temperaturdifferenz zwischen dem sich am schnellsten erwärmenden Raum und dem sich am langsamsten erwärmenden Raum auch während des Übergangs möglichst klein gehalten wird. Der letzte Schritt in Figur 1 zeigt nach dem Erreichen der Temperaturstufe S₃ und dem Wiederöffnen der Ventile das ungefähr gleichzeitige Erreichen der individuellen Raumtemperatur-Sollwerte im Endzustand TE. Diese Sollwerte könnten auch identisch sein, wenn in allen thermisch versorgten Räumen dieselbe Temperatur, d.h. dasselbe End-Temperaturniveau, gewünscht wird. Mit dem Erreichen der Raumtemperatur-Sollwerte ist der Algorithmus des erfindungsgemässen Verfahrens am Ziel angelangt, und es folgt eine Regelungsphase, in welcher die Raumtemperaturen auf ihren, den Raumtemperatur-Sollwerten entsprechenden, End-Temperaturniveaus gehalten werden.

Ergänzend zu Figur 1 ist noch zu sagen, dass wenn für einen Raum oder mehrere Räume deutlich niedrigere Raumtemperatur-Sollwerte gelten würden, die folglich schon nach einer früheren Temperaturstufe erreicht werden, diese Räume dann einfach aus dem Algorithmus herausgenommen würden, und der erfindungsgemässe Algorithmus mit den übrigen Räumen mit höheren Raumtemperatur-Sollwerten weitergeführt wird, bis alle Raumtemperaturen bei ihrem Sollwert angelangt sind.

In der Figur 1 wurde übrigens auf eine Einteilung der beiden Diagramm-Achsen verzichtet, weil die Temperaturstufen zwischen T_{A} und T_{E} beliebig wählbar sind (die Schrittgrösse zwischen den Temperaturstufen muss nicht konstant sein), und weil das Verfahren nicht von einer Messung der Zeit oder von Zeitintervallen abhängt, sondern nur von der Zustandserfassung der Raumtemperaturen in Bezug auf die Temperaturstufen und die End-Sollwerte.

Mit der vorliegenden Erfindung kann somit ein überraschend einfaches, alternatives Verfahren zur Verfügung gestellt werden, mit welchem das Problem von hydraulisch und thermisch schlecht versorgten Räumen bei Temperaturübergängen mit vergleichsweise geringem Aufwand gelöst werden kann. Auf diese Weise wird auch ein langsam reagierender Raum stufenweise und ohne grosse Verzögerung auf ein neues Temperaturniveau mitgezogen. Auch ein weit entfernter Raum, z.B. ein Zimmer in einem Schulhaus, kommt beim Aufheizen bald auf eine behagliche Temperatur.

## Patentansprüche

1. Verfahren zum Aufheizen oder Abkühlen von Räumen eines Gebäudes mit einem Temperiersystem, wobei das Temperiersystem umfasst:
a) einen zentralen Wärme-Erzeuger oder Kälte-Erzeuger mit einem Kreislaufverbundsystem mit Vor- und Rücklaufleitung;
b) eine zentrale Umwälzpumpe für die Zirkulation eines Temperierfluids im Kreislaufverbundsystem;
c) mindestens zwei Wärmetauscher-Einrichtungen, die jeweils einen Raum des Gebäudes thermisch versorgen, und die jeweils an die Vor- und Rücklaufleitung des Kreislaufverbundsystems angeschlossen sind;
d) je ein Ventil mit Stellantrieb pro Wärmetauscher-Einrichtung;
e) je einen Raumtemperaturfühler pro thermisch versorgtem Raum; und
f) eine zentrale Steuer- und Regeleinheit, welche mit den Stellantrieben der Ventile sowie mit den Raumtemperaturfühlern verbunden ist;
wobei mit dem Aufheizen oder Abkühlen in den thermisch versorgten Räumen des Gebäudes ein Temperaturübergang vollzogen wird von einem Ausgangszustand auf einen vom Ausgangszustand unterschiedlichen Endzustand mit entsprechenden Raumtemperatur-Sollwerten,
**dadurch gekennzeichnet, dass** beim Temperaturübergang nach folgendem Algorithmus mit mindestens zwei zwischen dem Ausgangszustand und dem Endzustand liegenden, vorgewählten Temperaturstufen vorgegangen wird, wobei:
i) zunächst von der zentralen Steuer- und Regeleinheit alle Ventile ganz geöffnet werden;
ii) sobald in einem Raum die vom entsprechenden Raumtemperaturfühler gemeldete Temperatur eine erste Temperaturstufe erreicht hat, das betreffende Ventil ganz geschlossen wird;
iii) sobald in einem nächsten Raum diese erste Temperaturstufe ebenfalls erreicht wird, auch jenes Ventil ganz geschlossen wird;
iv) mit jedem weiteren Raum so verfahren wird, bis auch in einem letzten Raum diese erste Temperaturstufe erreicht wird;
v) sodann alle Ventile wieder ganz geöffnet werden, bis in einem Raum eine zweite Temperaturstufe erreicht wird, worauf das betreffende Ventil ganz geschlossen wird, und weiter so verfahren wird, bis auch in einem letzten Raum diese zweite Temperaturstufe erreicht wird;
vi) alle Ventile wieder ganz geöffnet werden, und der Algorithmus so lange fortgesetzt wird, bis alle thermisch versorgten Räume ihren Raumtemperatur-Sollwert erreicht haben;
vii) nach Erreichen eines Raumtemperatur-Sollwertes eine Regelungsphase folgt, in welcher die Temperatur im betreffenden Raum durch die zentrale Steuer- und Regeleinheit auf einem dem Raumtemperatur-Sollwert entsprechenden End-Temperaturniveau gehalten wird.

2. Verfahren nach Anspruch 1, **dadurch gekennzeichnet, dass** das Temperiersystem eine Heizungsanlage und/oder eine Kühlanlage ist.

3. Verfahren nach einem der vorhergehenden Ansprüche, **dadurch gekennzeichnet, dass** jede Wärmetauscher-Einrichtung mindestens einen Wärmetauscher umfasst, und dass die Wärmetauscher von einem Temperierfluid durchströmbare Temperierelemente sind.

4. Verfahren nach Anspruch 3, **dadurch gekennzeichnet, dass** die Wärmetauscher ausgewählt sind aus Heizkörpern und/oder Kühlkörpern.

5. Verfahren nach Anspruch 3, **dadurch gekennzeichnet, dass** die Wärmetauscher ausgewählt sind aus Radiatoren und Fussbodenheizungen.

6. Verfahren nach einem der vorhergehenden Ansprüche, **dadurch gekennzeichnet, dass** es sich beim Temperierfluid um ein Wärmeträgermedium handelt, bevorzugt um Wasser.

7. Verfahren nach Anspruch 1, **dadurch gekennzeichnet, dass** das Temperierfluid vom zentralen Wärme-Erzeuger oder Kälte-Erzeuger auf eine zum Aufheizen oder zum Abkühlen passende Vorlauftemperatur gebracht wird.

8. Verfahren nach Anspruch 1, **dadurch gekennzeichnet, dass** mindestens drei Räume des Gebäudes von Wärmetauscher-Einrichtungen thermisch versorgt werden.

9. Verfahren nach Anspruch 1, **dadurch gekennzeichnet, dass** das Gebäude stationär oder mobil ist.

10. Verfahren nach Anspruch 1, **dadurch gekennzeichnet, dass** der Algorithmus mindestens drei vorgewählte Temperaturstufen zwischen dem Ausgangszustand und dem dazu unterschiedlichen Endzustand umfasst.

11. Verfahren nach Anspruch 10, **dadurch gekennzeichnet, dass** zwischen den Temperaturstufen eine konstante Schrittgrösse gewählt wird.

12. Verfahren nach Anspruch 11, **dadurch gekennzeichnet, dass** die Schrittgrösse im Bereich von 0.1 bis 1.0 °C liegt, bevorzugt bei 0.5 °C.

13. Verfahren nach einem der vorhergehenden Ansprüche, **dadurch gekennzeichnet, dass** eine nächste Temperaturstufe im Algorithmus jeweils erst dann in Angriff genommen wird, wenn in allen thermisch versorgten Räumen eine bestimmte Temperaturstufe erreicht worden ist.

## Claims

1. Method for heating or cooling rooms of a building with a temperature-control system, wherein the temperature-control system comprises:
a) a central heat generator or cold generator with a multiple circuit circulation system having a supply pipe and a return pipe;
b) a central circulation pump for the circulation of a temperature-control fluid in the multiple circuit circulation system;
c) at least two heat exchanger devices, each of which thermally supplies one room of the building and each of which is connected to the supply pipe and to the return pipe of the multiple circuit circulation system;
d) one valve each with actuator per heat exchanger unit;
e) one room temperature sensor each per thermally supplied room; and
f) a central control and regulation unit, which is connected to the actuators of the valves as well as to the room temperature sensors;
wherein with the heating or cooling in the thermally supplied rooms of the building a temperature transition is carried out from an initial state to a final state different from the initial state with corresponding room temperature setpoint values,
**characterized in that** the temperature transition is carried out according to the following algorithm with at least two preselected temperature levels lying between the initial state and the final state, wherein:
i) all valves are first opened completely by the central control and regulation unit;
ii) as soon as the temperature in a room reported by the corresponding room temperature sensor has reached a first temperature level, the valve concerned is closed completely;
iii) as soon as this first temperature level is also reached in the next room, that valve is also closed completely;
iv) the same procedure is applied to each additional room until this first temperature level is also reached in a last room;
v) then all valves are fully opened again until a second temperature level is reached in one room, whereupon the respective valve is fully closed, and the procedure continues until this second temperature level is reached in a last room as well;
vi) all valves are fully opened again and the algorithm continues until all thermally supplied rooms have reached their room temperature setpoint value;
vii) after reaching a room temperature setpoint value, a regulation phase follows in which the temperature in the room concerned is maintained by the central control and regulation unit at an end temperature level corresponding to the room temperature setpoint value.

2. Method according to claim 1, **characterized in that** the temperature-control system is a heating system and/or a cooling system.

3. Method according to one of the preceding claims, **characterized in that** each heat exchanger device comprises at least one heat exchanger, and **in that** the heat exchangers are temperature-control elements through which a temperature-control fluid can flow.

4. Method according to claim 3, **characterized in that** the heat exchangers are selected from heating elements and/or cooling elements.

5. Method according to claim 3, **characterized in that** the heat exchangers are selected from radiators and floor heating systems.

6. Method according to one of the preceding claims, **characterized in that** the temperature-control fluid is a heat transfer medium, preferably water.

7. Method according to claim 1, **characterized in that** the temperature-control fluid is brought from the central heat generator or cold generator to a supply temperature suitable for heating or cooling.

8. Method according to claim 1, **characterized in that** at least three rooms of the building are thermally supplied by heat exchanger devices.

9. Method according to claim 1, **characterized in that** the building is stationary or mobile.

10. Method according to claim 1, **characterized in that** the algorithm comprises at least three preselected temperature levels between the initial state and the final state that is different therefrom.

11. Method according to claim 10, **characterized in that** a constant step size is selected between the temperature levels.

12. Method according to claim 11, **characterized in that** the step size is in the range from 0.1 to 1.0°C, preferably at 0.5°C.

13. Method according to one of the preceding claims, **characterized in that** a next temperature level in the algorithm is only started in each case when a certain temperature level has been reached in all thermally supplied rooms.

## Revendications

1. Procédé pour chauffer ou refroidir des pièces d'un bâtiment comprenant un système de régulation de température, le système de régulation de température comprenant :
a) un générateur de chaleur central ou un générateur de froid central avec un système de circuits avec une conduite d'alimentation et une conduite de retour ;
b) une pompe de circulation centrale pour faire circuler un fluide de régulation de température dans le système de circuits ;
c) au moins deux dispositifs échangeurs de chaleur qui approvisionnent thermiquement chacun une pièce du bâtiment et qui sont raccordés à la conduite d'alimentation et à la conduite de retour du système de circuits ;
d) une soupape avec servocommande par dispositif échangeur de chaleur ;
e) une sonde de température ambiante par pièce alimentée thermiquement ; et
f) une unité de commande et de régulation centrale qui est reliée aux servomoteurs des soupapes ainsi qu'aux sondes de température ambiante ;
le chauffage ou le refroidissement dans les pièces alimentées thermiquement du bâtiment permettant de réaliser un changement de température depuis un état de départ à un état d'arrivée différent de l'état de départ avec des valeurs de consigne de température ambiante correspondantes,
**caractérisé en ce que**, lors du changement de température suivant l'algorithme suivant avec au moins deux paliers de température préétablis situés entre l'état de départ et l'état d'arrivée, on procède comme suit :
i) on ouvre d'abord complètement toutes les soupapes de l'unité de commande et de régulation centrale ;
ii) dès que, dans une pièce, la température indiquée par la sonde de température ambiante correspondante a atteint un premier palier de température, on ferme complètement la soupape concernée ;
iii) dès que, dans une pièce suivante, ce premier palier de température est également atteint, on ferme également complètement la soupape en question ;
iv)on procède ainsi avec chaque pièce jusqu'à que ce premier palier de température soit atteint dans la dernière pièce ;
v) on rouvre ensuite complètement toutes les soupapes jusqu'à ce que dans une pièce un deuxième palier de température soit atteint, la soupape en question étant alors ensuite complètement fermée. On procède ainsi jusqu'à ce que ce deuxième palier de température soit atteint dans la dernière pièce ;
vi)on rouvre ensuite complètement toutes les soupapes et on poursuit l'algorithme jusqu'à ce que toutes les pièces alimentées thermiquement aient atteint leur valeur de consigne de température ambiante :
vii) une fois la valeur de consigne de température ambiante atteinte, s'ensuit une phase de régulation au cours de laquelle la température dans la pièce concernée est maintenue par l'unité de commande et de régulation centrale à un niveau de température final correspondant à la valeur de consigne de température ambiante.

2. Procédé selon la revendication 1, **caractérisé en ce que** le système de régulation de température est une installation de chauffage et/ou une installation de réfrigération.

3. Procédé selon l'une des revendications précédentes, **caractérisé en ce que** chaque dispositif échangeur de chaleur comprend au moins un échangeur thermique, et **en ce que** les échangeurs thermiques sont des éléments de régulation de température pouvant être parcourus par un fluide de régulation de température.

4. Procédé selon la revendication 3, **caractérisé en ce que** les échangeurs thermiques sont choisis parmi des éléments de chauffage et/ou de refroidissement.

5. Procédé selon la revendication 3, **caractérisé en ce que** les échangeurs thermiques sont choisis parmi des radiateurs et des chauffages au sol.

6. Procédé selon l'une des revendications précédentes, **caractérisé en ce que** le fluide de régulation de température est un fluide caloporteur, de préférence de l'eau.

7. Procédé selon la revendication 1, **caractérisé en ce que** le fluide de régulation de température est amené par le générateur de chaleur ou le générateur de froid à une température d'entrée dans la conduite d'alimentation adaptée à un chauffage ou à un refroidissement.

8. Procédé selon la revendication 1, **caractérisé en ce qu'**au moins trois pièces du bâtiment sont alimentées thermiquement par les dispositifs échangeurs de chaleur.

9. Procédé selon la revendication 1, **caractérisé en ce que** le bâtiment est fixe ou mobile.

10. Procédé selon la revendication 1, **caractérisé en ce que** l'algorithme comprend au moins trois paliers de température préétablis entre l'état de départ et l'état d'arrivée différent de l'état de départ.

11. Procédé selon la revendication 10, **caractérisé en ce qu'**il est choisi un incrément constant entre les paliers de température.

12. Procédé selon la revendication 11, **caractérisé en ce que** l'incrément est compris dans la plage allant de 0,1 à 1,0 °C, et est de préférence de 0,5 °C.

13. Procédé selon l'une des revendications précédentes, **caractérisé en ce que** le palier de température suivant n'est lancé dans l'algorithme qu'une fois qu'un palier de température déterminé a été atteint dans toutes les pièces alimentées thermiquement.
